# EUROPEAN PATENT SPECIFICATION

(11) **EP 1 443 226 B1**
(45) Date of publication and mention of the grant of the patent: **23.11.2005**
(21) Application number: 01274513.9
(22) Date of filing: 28.09.2001
(51) Int. Cl.: F16B 39/282, F16B 39/24

(54) **A FASTENING APPARATUS AND A SPECIAL TOOL THEREOF**
BEFESTIGUNGSVORRICHTUNG UND SPEZIALWERKZEUG DAFÜR
APPAREIL DE FIXATION ET OUTIL SPECIAL DESTINE A CE DERNIER

(43) Date of publication of application: 04.08.2004
(73) Proprietor: Zhao, Yao, Jilin City, Jilin Province 132022 (CN); Wang, Cheng, Jilin City, Jilin Province 132022 (CN)
(72) Inventor: Zhao, Yao, Jilin City, Jilin Province 132022 (CN); Wang, Cheng, Jilin City, Jilin Province 132022 (CN)
(74) Representative: Gervasi, Gemma
(86) International application number: PCT/CN2001/001463
(87) International publication number: WO 2003/029668

(56) References cited:
- CN-Y- 2 140 441
- CN-Y- 2 388 397
- FR-A- 547 087
- US-A- 3 275 055
- US-A- 5 080 545

## Description

### Technical field

The invention relates to a combination of a thread fastening means and a work piece according to the first part of claim 1.
(US 3 275 055 A).

### Background technology

At present, the method of stop backing of thread fastening means are: spring washer, threaded nut against each other, adhesive method, locking tab method, locking pin method, effective torque method, thread deformation method and so on, the disadvantages of above various stop backing method are non-ideal stop backing effect, inconvenient operation respectively; there are some disadvantages of no anti-detaching structure and detachable by using other conventional tool respectively, although the type of anti-detaching fastener is so many.

### Disclosure of the invention

In view of this, the intention of research and creation of the invention just is that how can provide a type of structure which can implement stop backing or anti-detaching thread fastening structure, if it is a stop backing structure, it can be also detached conveniently by using specific tool matched, while for the anti-detaching structure there is absolutely not any effective method without damage the structure to detach it.

By means of practical experiment of dealing for research, production, manufacturing and so on of various mechanical technology in many years, the applicant of the invention make a completely new designing structure on the basis of researching and appraising, and the invention is achieved finally.

The object of the invention is to provide a new type of stop backing, anti-detaching thread fastening means which is convenient for using, stop backing effect is reliable, and the thread fastener can be used in all of anti-detaching fastening locations.

To achieve above object the invention comprises the features of claim 1.

On both opposite end faces of thread fastener and washer of the invention provided with stop backing teeth respectively which can engage each other; the fasteners are bolt, thread strut, screw or nut; on outer circle of stop backing teeth of the supporting surface of screw, bolt or end face of nut provided with radial circular concave conveniently detaching step; on the thread part of bolt, screw provided with longitudinal positioning groove; on the end face of washer stop backing teeth are arranged lifting up toward the direction of screwing, the diameter of end face provided with stop backing teeth of the washer is larger than the outer diameter of the fastener, bolt, thread strut and washer provided with positioning groove and positioning tooth engaged each other; on the washer positioning teeth engaged with pre-cutting positioning groove of fastened work piece is provided.

The stop backing series fastener is provided with matched inner hexagonal spanner, at each angle of which there is a bevel face rising gradually from lower part of angle apex to the left or right, the bevel face may fit with convenient detaching step provided above supporting surface of bolt, thread strut or end face of nut respectively; the maximum distance between bevel face and the opposite bevel face equal or larger than the length of diagonal line of the inner hexagonal of spanner.

The anti-detaching series fastener includes bolt, screw, nut, characterized in that at outer edge of end face of the fastener there is supporting plane, on inner periphery stop backing teeth engaged with stop backing teeth of washer are arranged, the heights of both apex of the teeth and supporting plane are the same; on thread part of the bolt there is longitudinal positioning groove of washer; on one side of washer provided with stop backing teeth arranged around the hole diameter rising toward the direction of screwing, the diameter of end face provided with stop backing teeth of washer is smaller than the diameter of supporting surface, inner edge face of fastener respectively, on one side of the washer provided with positioning tooth or in inner edge provided with positioning tooth projected inward.

The advantage of the invention is in that: since on thread fastener series structure engaged between teeth is adopted, therefore, under various vibration environment the stop backing effect of fastener is reliable, attaching and detaching are simple and quick, can be used repeatedly; the anti-detaching series fastener cannot be detached in no way, once fastened, it can be used in anti-detaching locations of various installation; it is simple for manufacturing, cost effective, effect reliable, convenience for using.

### Description of drawings

- Fig. 1: is an operation state scheme of stop backing series fastener of bolt type;
- Fig.2: is front view of washer in Fig.1;
- Fig.3: is top view of Fig.2;
- Fig.4: is section view along A-A line of Fig.3;
- Fig.5: is front view of the nut in Fig. 1;
- Fig.6: is bottom view of Fig.5;
- Fig.7: is operation state scheme of fastener of stop backing series screw of the invention;
- Fig. 8: is top view of fastened work piece in Fig.7;
- Fig.9: is front view of washer in Fig.7
- Fig.10: is top view of Fig.9;
- Fig.11: is section view along B-B line of Fig. 10;
- Fig.12: is front view of screw in Fig.7;
- Fig.13: is bottom view of Fig.12;
- Fig.14: is operation state scheme of anti-detaching series fastener of bolt type;
- Fig.15: is top view of nut in Fig.14;
- Fig.16: is section view along C-C line of Fig. 15;
- Fig.17: is front view of washer in Fig. 14;
- Fig.18: is top view of Fig.17;
- Fig.19: is section view along D-D line of Fig. 18;
- Fig.20: is operation state scheme of anti-detaching fastener of screw type;
- Fig.21: is bottom view of screw in Fig.20;
- Fig.22: is section view along E-E line of Fig.21;
- Fig.23: is top view of washer in Fig.20;
- Fig.24: is section view along F-F line of Fig.23;
- Fig.25: is top view of specific conveniently detaching tool of stop backing series thread fasteners;
- Fig.26: is section view along G-G line of Fig.25.

### Embodiment of the invention

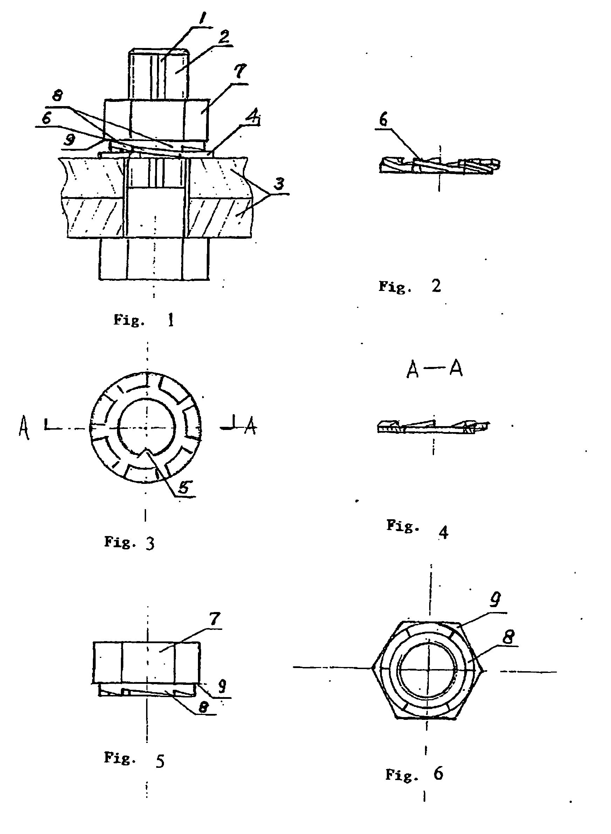

In the following, further description of given embodiment will be taken in conjunction with company drawings. Reference stop backing series fastener of bolt type of embodiment 1 shown in Figs.1 to 6, comprising bolt 2 with longitudinal positioning groove 1 of washer passing through work piece 3 fastened, projected inward positioning tooth 5 on inner edge of washer 4 aligned with positioning groove 1 is sheathed on to the part of bolt 2 exposing out of the work piece, the apex of stop backing teeth 6 arranged on outer edge of washer 4 rising towards the direction of screwing directs to thread end of the bolt 2, the diameter of end face arranged stop backing teeth on outer edge of washer 4 is larger than the diameter of nut of fastener, the teeth 6 on washer 4 are elastic stop backing teeth, that is, its stop backing teeth can be pressed down under gravity, after gravity disappearing it can rebound, screwing nut 7 in the thread of bolt 2, causing stop backing teeth 8 arranged on end face of the nut 7 to press work piece 3 and washer 4, causing one of stop backing teeth 6 on the washer 4 rebounds up along the gap between teeth of stop backing teeth of nut, that is, in stop backing state (shown as Fig.1), both stop backing teeth 8 of nut 7 and stop backing teeth of washer 4 form a pawl structure.

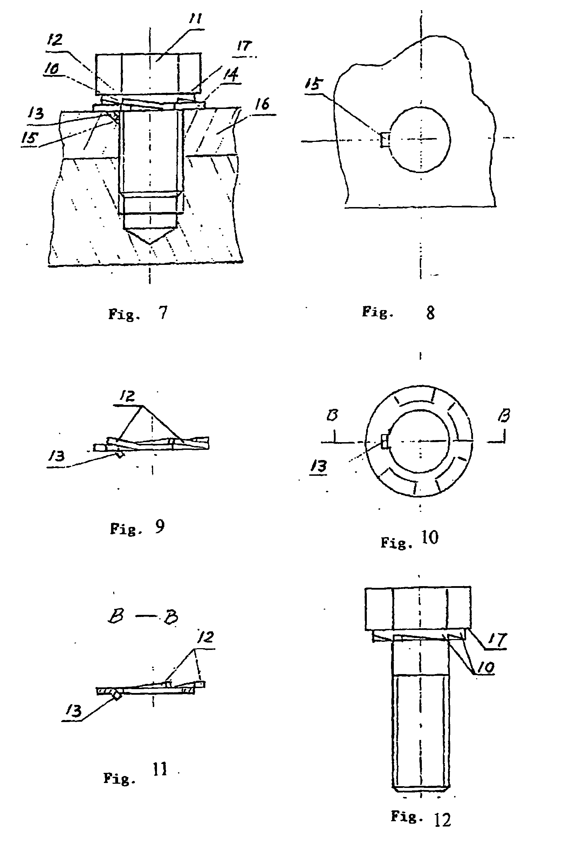

See stop backing series fastener of screw type of embodiment 2 shown in Fig. 7 to 13, it is consisted of: screw 11 on the supporting surface 17 of which stop backing teeth 10 are arranged, on the outer edge of one side stop backing teeth 12 are arranged rising up toward the direction of screwing, on the other side there is washer 14 having positioning tooth 13 of work piece, fastened work piece 16 with pre-formed positioning groove 15 of washer. Its operation procedure is as follows: put washer 14 on work piece and let positioning tooth 13 align with positioning grove 15 of washer on work piece, as shown in Fig. 7, screwing the bolt, the stop backing teeth 10 press washer 14 and fastened work piece 16 tightly, one of the stop backing teeth 12 of the washer 14 rebounds up along the gap between stop backing teeth 10 of supporting surface of bolt 11 head, present stop backing state (See Fig.7).

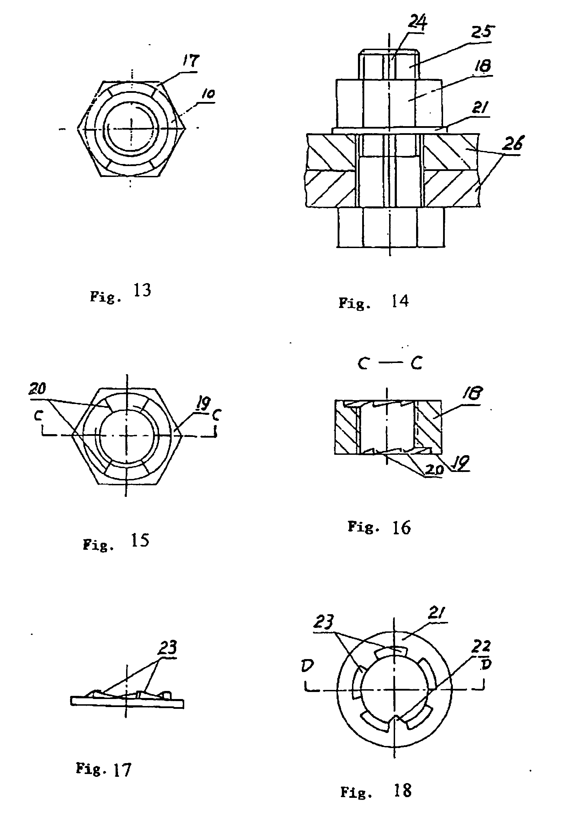

Reference anti-detaching series fastener of bolt type of embodiment 3 as shown in 14 to 19, the main differences of the present embodiment from embodiment 1 are: supporting surface 19 is provided on outer edge of end face of the nut 18 and stop backing teeth 20 are arranged around inner edge, the top of teeth lower than or equal to the height of supporting surface 19, such that the engaged part of stop backing teeth 20 of end face of the nut and stop backing teeth 23 of end face of the washer surrounds supporting surface of end face outer edge of the nut 18, in no way to detach; on inner edge of the washer 21 provided with inward projected positioning tooth 22, along periphery of hole diameter of washer stop backing teeth 23 rising up toward the direction of screwing are arranged, the diameter of end face having stop backing teeth of the washer less than the diameter of inner edge of supporting surface of the nut. Its operation procedure is as follows: as shown in Fig.14, the bolt 25 having longitudinal positioning groove of washer is passed through work piece 26 fastened, the inward projected positioning tooth 22 on inner edge of washer 21 are aligned with positioning groove 24 and sheathed on to the part of the bolt 25 exposed out of work piece 26, the apex of stop backing teeth 23 of washer 21 is directed toward the end of thread, then the nut 18 is screwed on the bolt 25, pressing work piece 26 and washer 21, all of the stop backing teeth 23 of washer 21 are rebounded along the gap between stop backing teeth 20 of the nut 18, that is, in anti-detaching state (see Fig.14).

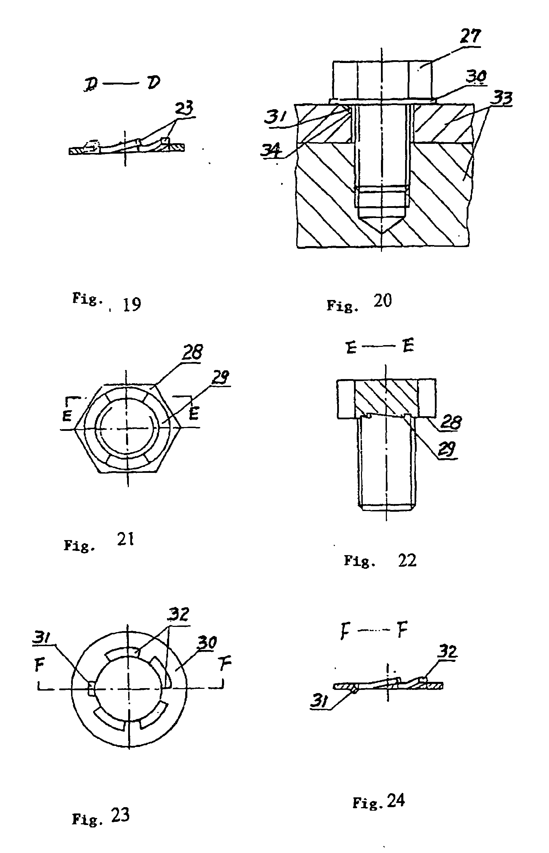

Reference anti-detaching series fastener of screw type of embodiment 4 shown in Fig. 20 to 24, the main differences between the present embodiment and embodiment 2 are: on outer edge of supporting surface of the screw 27 the supporting plane 28 is remained, the apex of stop backing teeth 29 arranged around bolt and supporting plane are in the same height; on one side of washer 30 there is positioning tooth 31 of work piece, on the part, the diameter of which is less than the diameter of inner edge of supporting surface 28 of the screw, on the other side on the part the diameter of which is less than inner edge diameter of supporting plane 28 stop backing teeth 32 rising up toward the direction of screwing are arranged on periphery along hole diameter. Its operation procedure is as follows: the positioning tooth 31 of the washer 30 is aligned with pre-cutting positioning groove 34 of work piece 33 and the washer 30 is placed on the work piece 33 and screwing the screw 27, pressing washer 30 and fastened work piece 33 tightly, all of stop backing teeth 32 of washer 30 are rebounded and engaged with stop backing teeth 29 of screw head i.e. in anti-detaching state (see Fig. 20).

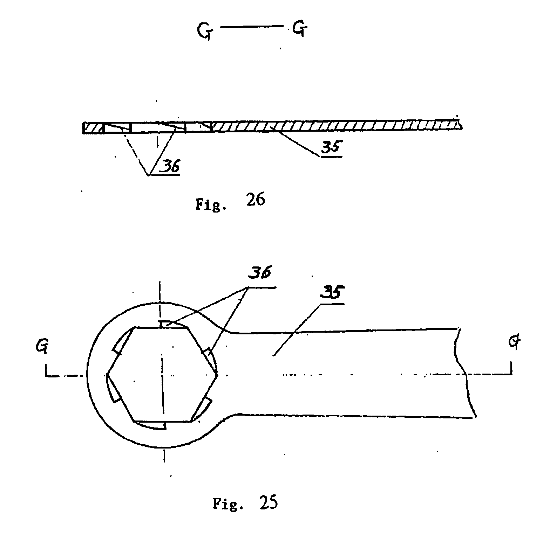

Reference embodiment 5 of conveniently detaching tool attached on stop backing series thread fasteners shown in Figs. 25, 26, and Fig. 1, the spanner 35 with one face of inclined faces 36 upward is sheathed on lower part of the nut 7 shown in Fig. 1, screwing in bevel down direction of inclined face 36, such that the inclined face 36 is act on radial circular conveniently detaching step 9 projected inward of end face of the nut 7, and since the diameter of end face arranged stop backing teeth on outer edge of washer 4 is larger than the diameter of the nut of fasteners, one side of plane of the spanner 35 presses down stop backing teeth 6 of the washer 4, then the nut could be detached normally by using general tool.

The stop backing series, anti-detaching series thread fasteners provided by above embodiments may be matched and combined according to the specific requirement of fastened work piece and its environment.

To sum up, by using simple structural design, the stop backing, anti-detaching fastening means may be achieved in true sense by the invention. Significantly, the invention is a novel, advanced and having wide applications new design. The above description is specific embodiment and used technical principle of the invention.

## Claims

1. A combination of a thread fastening means and a work piece (16,33), the thread fastening means comprising a complete set of thread fastener (11,27) and washer (14,30), whereby on opposite faces of thread fastener (11,27) and washer (14,30) stop backing teeth (10,12; 29,32) are provided respectively, the stop backing teeth on one of end faces are elastic teeth, the fastener is bolt, thread strut, screw or nut, on outer circle of stop backing teeth of supporting surface of screw, bolt or end face of nut provided with radial circular conveniently detaching concave step, **characterized in that** the washer (14,30) on the face opposite to where the stop backing teeth (12,32) are located has a positioning tooth (13,31) and the work piece (16,33) has a corresponding pre-formed positioning groove (15,34), where the positioning tooth (13,31) in operation is aligned, so that the washer (14,30) is prevented to rotate relative to the work piece (16,33).

2. The combination according to claim 1, **characterized in that** the stop backing teeth (10,12; 29,32) provided on opposite end faces of thread fastener (11,27) and washer (14,30) can be engaged each other.

3. The combination according to claim 2, **characterized in that** said stop backing teeth (10,12; 29,32) rising up toward the direction of screwing are arranged on the end face of washer (14,30), the diameter of end face provided with stop backing teeth (10,12; 29,32) of washer (14,30) is lager than outer diameter of the thread fastener (11,27).

## Patentansprüche

1. Kombination aus einem Gewindebefestigungsmittel und einem Werkstück (16, 33), wobei das Gewindebefestigungsmittel einen vollständigen Satz aus einem Gewindebefestigungselement (11, 27) und einer Unterlegscheibe (14, 30) umfasst, wobei weiter auf einander zugewandten Flächen des Gewindebefestigungselements (11, 27) und der Unterlegscheibe (14, 30) jeweils Rückhaltezähne (10, 12; 29, 32) vorhanden sind, die Rückhaltezähne auf einer der Endflächen elastische Zähne sind, das Befestigungselement ein Bolzen, eine Gewindestrebe, eine Schraube oder eine Mutter ist und auf dem äußeren Kreis der Rückhaltezähne der Auflagefläche der Schraube, des Bolzens oder auf der Endfläche der Mutter eine radiale kreisförmige konkave Stufe zum bequemen Lösen vorhanden ist, **dadurch gekennzeichnet, dass** die Unterlegscheibe (14, 30) auf der Seite, die der Seite mit den Rückhaltezähnen (12, 32) gegenüber liegt, einen Positionierzahn (13, 31) aufweist und das Werkstück (16, 33) eine entsprechende vorgeformte Positionierrille (15, 34) aufweist, an der der Positionierzahn bei der Anwendung ausgerichtet wird, so dass die Unterlegscheibe (14, 30) daran gehindert wird, sich relativ zum Werkstück (16, 33) zu drehen.

2. Kombination gemäß Anspruch 1, **dadurch gekennzeichnet, dass** die Rückhaltezähne (10, 12; 29, 32), die auf den einander zugewandten Seiten des Gewindebefestigungselements (11, 27) und der Unterlegscheibe (14, 30) vorhanden sind, miteinander in Eingriff gebracht werden können.

3. Kombination gemäß Anspruch 2, **dadurch gekennzeichnet, dass** die genannten Rückhaltezähne (10, 12; 29, 32), die in der Richtung, in der geschraubt wird, ansteigen, auf der Endfläche der Unterlegscheibe (14, 30) angeordnet sind, wobei der Durchmesser der Endfläche, auf der sich die Rückhaltezähne (10, 12; 29, 32) der Unterlegscheibe (14, 30) befinden größer als der Außendurchmesser des Gewindebefestigungselements (11, 27) ist.

## Revendications

1. Une combinaison des moyens de fixation fileté et une pièce de fabrication (16, 33) ; les moyens de fixation comprenant un jeu complet d'éléments de fixation filetés (11, 27) et des rondelles (14, 30) ; des dents dorsales d'arrêt (10, 12 ; 29, 32) étant pourvues respectivement sur les côtés opposés de l'élément de fixation fileté (11, 27) et de la rondelle ; les dents dorsales d'arrêt sur l'un des côtés terminaux étant des dents élastiques, l'élément de fixation étant un boulon, une entretoise filetée, une vis ou un écrou sur le cercle extérieur des dents dorsales d'arrêt de la surface de support des vis, boulon ou le côté terminale de l'écrou étant pourvus d'un gradin concave radial circulaire se détachant facilement, **caractérisé en ce que** la rondelle (14, 30) disposée sur le côté opposé où sont situées les dents dorsales d'arrêt (12, 32) a une dent (13, 31) de positionnement et la pièce de fabrication (16, 33) a une rainure (15, 34) de positionnement préformée correspondante ; la dent de positionnement (13, 31) en fonctionnement étant alignée afin d'empêcher la rotation de la rondelle (14, 30) par rapport à la pièce de fabrication (16, 33).

2. La combinaison selon la revendication 1, **caractérisée en ce que** les dents dorsales d'arrêt (10, 12 ; 29, 32) pourvues sur les côtés opposés de l'élément de fixation fileté (11, 27) et la rondelle (14, 30) peuvent s'engrener les unes dans les autres.

3. La combinaison selon la revendication 2, **caractérisée en ce que** lesdites dents dorsales d'arrêt (10, 12 ; 29, 32) montant vers la direction de vissage, sont disposées sur le côté terminal de la rondelle (14, 30) ; le diamètre du côté terminal pourvu de dents dorsales d'arrêt (10, 12 ; 29, 32) de le rondelle (14, 30) étant supérieur au diamètre extérieur de l'élément de fixation fileté (11, 27).
